# EUROPEAN PATENT APPLICATION

(11) **EP 2 458 716 A1**
(43) Date of publication of application: **30.05.2012**
(21) Application number: 11191214.3
(22) Date of filing: 29.11.2011
(51) Int. Cl.: H02K 5/173, H02K 15/14, F16C 35/067

(54) **Coupling structure and method of bearing for eps motor**

(30) Priority: 30.11.2010 KR 20100120284
(71) Applicant: LG Innotek Co., Ltd., Seoul 100-714 (KR)
(72) Inventor: Kim, Taehwan, Seoul 100-714 (KR); Eom, Jaejun, Seoul 100-714 (KR)
(74) Representative: Novagraaf Technologies

(57) **Abstract**

Disclosed is a coupling structure of a bearing for an EPS motor to eliminate a gap caused by a tolerance between the bearing and a pocket of a housing of the EPS motor, thereby improving assembling precision and reducing noise, the coupling structure supporting rotation of a rotating shaft through the bearing coupled to a lower portion of the housing and including a bearing pocket bent upwards from a lower surface of the housing and having a cylindrical space to support an outer circumference of the bearing at an inner wall thereof, whereby a gap between the inner wall of the bearing pocket and the outer circumference of the bearing is eliminated by deforming the inner wall towards an inner circumference thereof by caulking, coupling force between the bearing and the housing can be increased, and thereby reliability in assembly and operation of the motor is improved.

## Description

### BACKGROUND OF THE INVENTION

### 1. Field of the Invention

The present invention relates generally to a structure and method for coupling a bearing and a housing of an EPS motor and, more particularly, to a coupling structure and method of a bearing for an EPS motor, which eliminates a gap caused by a tolerance between the bearing and a pocket of a housing of the EPS motor, thereby improving precision in assembling parts and achieving a reduction in noise.

### 2. Description of the Related Art

Generally, an auxiliary steering system supported by additional power is used as a device for ensuring the steering stability of a vehicle. Conventionally, the auxiliary steering system uses a hydraulic pressure. However, recently, an electronic power steering system, which consumes less power and is excellent in accuracy, has been used.

Such an electronic power steering system (EPS) drives a motor by an electronic control unit depending on driving conditions detected by a vehicle speed sensor, a torque angle sensor and a torque sensor, thus ensuring stability in cornering and providing a rapid restoring force, and thereby allowing a driver to safely drive a vehicle.

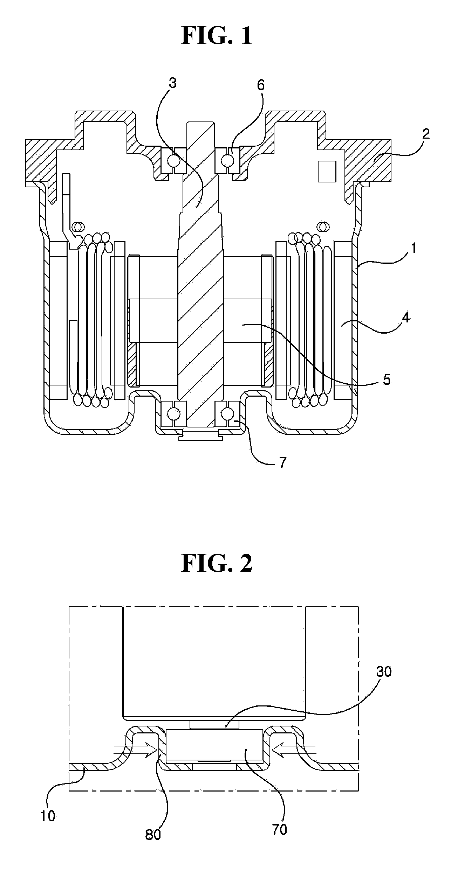

FIG. 1 is a side sectional view showing a conventional EPS motor. As shown in the drawing, an external appearance of the EPS motor is defined by a housing 1 and a bracket 2. The housing 1 takes a shape of a cylinder that is open at an upper portion thereof. The bracket 2 is coupled to an upper portion of the housing 1.

The housing 1 and the bracket 2 support a rotating shaft 3. A steering shaft of a vehicle is connected to an upper portion of the rotating shaft 3, thus providing power for assisting a steering operation as described above.

A rotor 5 including a core and a magnet is provided on an outer circumference of the rotating shaft 3, and a stator 4 including a core and a coil is coupled to an inner circumference of the housing 1, so that electromagnetic force is supplied from an outer circumference of the rotor 5.

If a current is applied to the stator 4, the rotor 5 is rotated by electromagnetic interaction between the rotor 5 and the stator 4, thus resulting in rotation of the rotating shaft 3, whereby rotation of the steering shaft is assisted.

The rotating shaft 3 is supported at upper and lower portions of the housing 1 by bearings 6 and 7, respectively. Concentricity is required between the upper and lower bearings 6 and 7 to enable the rotor 5 to smoothly rotate.

In the case of the lower bearing 7 directly coupled to the housing 1, the lower bearing 7 is coupled to a predetermined portion of the housing 1 through press-fitting to rotatably support the rotating shaft 3 at a lower position. The housing 1 is generally manufactured as a press product through deep drawing, so that a manufacturing cost thereof is low, but dimensional precision is undesirably low.

Therefore, an assembly tolerance occurs between the lower bearing 7 and the housing 1, thus deteriorating rotational precision and causing noise.

Further, in this case, the lower bearing 7 may be impaired during assembly or operation.

### SUMMARY OF INVENTION

Accordingly, the present invention has been made keeping in mind the above problems occurring in the prior art, and an object of the present invention is to provide a coupling structure and method of a bearing for an EPS motor, which is configured to enable firm coupling between a housing and a bearing, thus allowing a rotating shaft to be precisely rotatably supported, and preventing noise from being generated and preventing the bearing from being damaged during operation.

In order to accomplish the above object, the present invention provides a coupling structure of a bearing for an EPS motor that supports rotation of a rotating shaft via a bearing coupled to a lower portion of a housing, the coupling structure comprising a bearing pocket bent upwards from a lower surface of the housing and having a cylindrical space therein to support an outer circumference of the bearing at an inner wall thereof, whereby a gap between the inner wall of the bearing pocket and the outer circumference of the bearing is eliminated by deforming the inner wall towards an inner circumference thereof by caulking. Therefore, coupling force between the bearing and the housing can be increased, so that reliability in assembly and operation of the motor is improved.

The coupling structure of the bearing for the EPS motor according to the present invention further includes a protrusion protruding from the inner wall of the bearing pocket towards the inner circumference thereof by caulking.

Further, the present invention provides a coupling method of a bearing for an EPS motor, comprising inserting a bearing into a bearing pocket formed in a lower surface of a housing, and eliminating a gap between an inner wall of a bearing pocket and an outer circumference of the bearing by caulking at an outer wall of the bearing pocket, whereby the bearing is coupled to a lower portion of the housing. Therefore, the gap between the bearing and the housing can be eliminated in an efficient and simple way, so that assembly reliability and production efficiency are improved.

Further, in the coupling method of the bearing for the EPS motor according to the present invention, the inserting is performed by press-fitting the bearing into the bearing pocket.

As apparent from the above description, the coupling structure and method of the bearing for the EPS motor according to the present invention is advantageous in that firm coupling is realized between the housing and the bearing, and damage to parts is prevented during insertion, thus providing firm coupling force even if an error occurs during the manufacture of the housing or the assembly of the bearing, allowing the rotating shaft to be precisely rotatably supported and thereby preventing noise from being generated and preventing the bearing from being damaged, therefore ensuring operational reliability of the motor.

### BRIEF DESCRIPTION OF THE DRAWINGS

FIG. 1 is a side sectional view showing a conventional EPS motor; and
FIG. 2 is a side sectional view showing a coupling structure of a bearing for an EPS motor in accordance with the present invention.

### Detailed DESCRIPTION OF the invention

Hereinafter, a coupling structure of a bearing for an EPS motor in accordance with a preferred embodiment of the present invention will be described in detail with reference to the accompanying drawings.

FIG. 2 is a side sectional view showing a coupling structure of a bearing for an EPS motor in accordance with the present invention.

A housing 10 takes a shape of a cylinder that is open at an upper portion thereof, and receives and supports the stator 4 (see FIG. 1) therein. Hereinafter, a portion in which an opening of the housing 10 is formed is referred to as an upper portion, and a portion to which a lower bearing 70 is coupled is referred to as a lower portion.

The housing 10 is made of a metal material, generally, aluminum having high heat conductivity.

A bearing pocket 80 having a cylindrical space is formed in a lower portion of the housing 10, and defines a space for inserting and supporting the lower bearing 70.

The lower portion of the housing 10 is bent upwards to form the cylindrical space around a central axis, thus forming the bearing pocket 80. As described above, the housing 10 manufactured by a press process has a problem wherein precision is low.

The lower bearing 70 takes a shape similar to a ring, and rotatably supports a lower end of the rotating shaft 30 therein.

An outer circumference of the lower bearing 70 is brought into close contact with and is supported by an inner wall of the bearing pocket 80. The coupling of the lower bearing 70 with the bearing pocket 80 is performed by press-fitting the lower bearing 70 into the bearing pocket 80 from an upper position to a lower position. As will be described below, if a process of removing a gap between the bearing pocket 80 and the lower bearing 70 is added after the insertion of the lower bearing 70 into the bearing pocket 80, the lower bearing 70 may be press-fitted into the bearing pocket 80 without applying pressure.

In this case, it should be noted that damage to the bearing 70 can be minimized during assembly.

As such, because of manufacturing tolerance of the housing 10, particularly the bearing pocket 80, the lower bearing 70 is not completely coupled and supported, thus causing noise when the rotating shaft 30 rotates. Therefore, a noise preventing structure for solving the problem will be described below in detail.

The bearing pocket 80 includes a bottom facing a lower surface of the lower bearing 70, an inner wall brought into close contact with an outer circumference of the lower bearing 70, and an outer wall bent upwards from the housing 10 to form a vertical wall when viewed from an outside.

A gap between the inner wall of the bearing pocket 80 and the outer circumference of the lower bearing 70 caused by a manufacturing tolerance may be eliminated by caulking.

The caulking means a process that eliminates a gap by chiseling an edge or the like using a caulking chisel having a blunt tip so as to maintain airtightness between parts that are in close contact with each other. The above-mentioned caulking process is performed in a direction from the outer wall of the bearing pocket 80 to an inner circumference thereof.

In FIG. 2, the caulking direction is shown by arrows. Force is applied from opposite sides of the outer wall of the bearing pocket 80 to the inner circumference thereof. Here, force may be applied simultaneously from the opposite sides, or may be applied sequentially in a circumferential direction.

As the result of the caulking process, the gap between the inner wall of the bearing pocket 80 and the outer circumference of the lower bearing 70 can be completely filled. If necessary, a protrusion may be formed on a predetermined portion of the inner wall towards the inner circumference to increase coupling force.

As such, the shape for compensating for the gap may be variously changed according to the material of the housing 10, the shape of the caulking chisel or the strength or number of hitting.

The method of coupling the bearing 70 to the bearing pocket 80 will be described as follows. The bearing pocket 80 is provided in the lower portion of the housing 10 through a press process, and the bearing 70 is inserted into the bearing pocket 80 formed in the lower surface of the housing 10. When such a process has been completed, the caulking process is performed on the outer wall of the bearing pocket 80, thus eliminating the gap between the inner wall of the bearing pocket 80 and the outer circumference of the bearing 70. Thereby, the lower bearing 70 comes into close contact with the bearing pocket 80, and the coupling force between the lower bearing 70 and the bearing pocket 80 is increased.

Meanwhile, the insertion of the lower bearing 70 into the bearing pocket 80 may be performed through press-fitting. Alternatively, in consideration of the caulking process that will be performed later, the lower bearing 70 may be inserted into the bearing pocket 80 without applying pressure.

As described above, the present invention provides a coupling structure and method of a bearing for an EPS motor, which is capable of offsetting an error made during the production of a housing and ensuring firm coupling, thus improving reliability in operation and assembly, and preventing noise from being generated during operation.

While the invention has been described in its preferred embodiments with reference to the accompanying drawings, it is to be understood that the invention is not limited thereto but may be variously embodied within the scope of the following claims.

## Claims

1. A coupling structure of a bearing for an EPS motor, comprising:
a housing;
a bearing coupled to a lower portion of the housing, and supporting a rotating shaft rotatably provided in the housing; and
a bearing pocket bent upwards from a lower surface of the housing, and having a cylindrical space therein to support an outer circumference of the bearing at an inner wall thereof,
whereby a gap between the inner wall of the bearing pocket and the outer circumference of the bearing is eliminated by deforming the inner wall towards an inner circumference thereof by caulking.

2. The coupling structure as set forth in claim 1, further comprising:
a protrusion protruding from the inner wall of the bearing pocket towards the inner circumference thereof by caulking.

3. A coupling method of a bearing for an EPS motor, comprising:
inserting a bearing into a bearing pocket formed in a lower surface of a housing; and
eliminating a gap between an inner wall of a bearing pocket and an outer circumference of the bearing by caulking at an outer wall of the bearing pocket,
whereby the bearing is coupled to a lower portion of the housing.

4. The coupling method as set forth in claim 3, wherein the inserting is performed by press-fitting the bearing into the bearing pocket.
